# EUROPEAN PATENT APPLICATION

(11) **EP 3 838 017 A1**
(43) Date of publication of application: **23.06.2021**
(21) Application number: 19218521.3
(22) Date of filing: 20.12.2019
(51) Int. Cl.: A24F 40/50, A24F 40/60, A24F 40/65, H04M 1/725

(54) **SYSTEM AND METHOD OF PROVIDING A NOTIFICATION ON A SMOKING SUBSTITUTE DEVICE AND MOBILE DEVICE**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

A system comprising a smoking substitute device and a mobile device, the smoking substitute device being connected to a mobile device, and the system being configured to perform a first notification on the smoking substitute device and simultaneously perform a second notification on the mobile device, wherein the second notification corresponds the first notification. A method of managing a smoking substitute device, the smoking substitute device being connected to a mobile device, the method comprising: providing a first notification on the smoking substitute device and simultaneously providing a second notification corresponding to the first notification on the mobile device

## Description

### TECHNICAL FIELD

The present invention relates to a smoking substitute device and particularly, although not exclusively, to providing notifications on a smoking substitute device and a connected mobile device.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products. Some smoking substitute systems use smoking substitute articles (also referred to as a "consumables") that are designed to resemble a traditional cigarette and are cylindrical in form with a mouthpiece at one end.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu™ e-cigarette. The myblu™ e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO™ e-cigarette. The blu PRO™ e-cigarette is an open system device which includes a main body, a (refillable) tank, and a mouthpiece.

The main body and tank are physically and electrically coupled together by screwing one to the other. The mouthpiece and refillable tank are physically coupled together by screwing one of the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

An example of the HT approach is the IQOS™ smoking substitute device from Philip Morris Ltd. The IQOS™ smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HT approach is the device known as "Glo"™ from British American Tobacco p.l.c. Glo™ comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

The present invention has been devised in light of the above considerations.

### Summary of the Invention

In a first aspect, the invention provides a system comprising a smoking substitute device and a mobile device, the smoking substitute device being connected to a mobile device, and the system being configured to perform a first notification on the smoking substitute device and simultaneously perform a second notification on the mobile device, wherein the second notification corresponds the first notification.

In a second aspect, the invention provides a method of managing a smoking substitute device, the smoking substitute device being connected to a mobile device, the method comprising: providing a first notification on the smoking substitute device and simultaneously providing a second notification corresponding to the first notification on the mobile device.

In this way, as the corresponding notifications are given by the mobile device and the smoking substitute device, the user can be sure that the mobile device and smoking substitute device are working correctly and are connected (e.g. wirelessly, for example paired by Bluetooth™ or Wifi) properly. The mobile device and smoking substitute perform mirrored notifications so that the user can quickly and easily see that the devices are connected correctly. Providing the notification via the mobile device as well as the smoking substitute device may also allow the user to better understand the notification as further contextual information may be provided on the mobile device.

Simultaneous is intended to mean that the notifications happen at the same time within a user-perception tolerance. It may include notifications being up to 0.5 seconds apart, or up to one second apart.

In a third aspect, the invention provides a smoking substitute device configured to, when connected with a mobile device, to either:
(i) perform a first notification and send a signal to the mobile device configured to cause a corresponding second notification to occur on the mobile device simultaneously to the first notification, or
(ii) receive a signal from the mobile device indicative of the mobile device performing the second notification and perform the corresponding first notification simultaneously to the second notification.

In a fourth aspect, the invention provides a mobile device configured to, when connected with a smoking substitute device, to either:
(i) receive a signal from the smoking substitute device indicative of the smoking substitute device performing a first notification and perform a corresponding second notification, or
(ii) perform the second notification and send a signal to the smoking substitute device configured to cause the corresponding first notification to occur on the smoking substitute device;
such that the first and second notifications occur simultaneously.

The signals described above may also have other purposes. For example, a signal from the smoking substitute device to the mobile device which indicates a connection has been achieved may cause the mobile device to perform a corresponding second notification and may be considered to be a signal indicative of the smoking substitute device performing a first notification. The same is true of a signal from the mobile device to the smoking substitute device indicating a connection has been achieved.

The first and second notifications may be performed when a connecting process between the smoking substitute device and the mobile device has completed successfully. The mobile device may be connected with the smoking substitute device by a Bluetooth™ connection. The mobile device may be connected with the smoking substitute device by a Wifi connection. The connecting process may be a pairing of the devices, for example using Bluetooth™. The smoking substitute device may comprise a wireless interface configured to communicate wirelessly with a mobile device, for example, via an application installed on the device.

The first and second notifications may be performed to indicate a battery level of the smoking substitute device, for example, below 20%, over 20%, between 50 and 100% inclusive, between 49% and 20% inclusive and/or between 19% and 0% inclusive. The first and second notifications may be performed to indicate that the mobile device and smoking substitute device are within Bluetooth™ range, and/or to indicate the smoking substitute device will shut down, and/or the user inhales.

The first notification may comprise a visual notification. The second notification may comprise a visual notification. The first notification may comprise activation of a light on the smoking substitute device. Activation of the light may comprise flashing the light in a pattern. For example, flashing the light three times.

Preferably, the mobile device may be configured to display an image representing the smoking substitute device and the second notification may comprise a representation of the first notification on the image.

The first notification may comprise a haptic notification. The first notification may comprise a haptic notification and a visual notification.

The second notification may comprise a visual notification indicative of vibration. The second notification may comprise a haptic notification.

The second notification may have the same pattern as the first notification. For example, when the first notification comprises activation of a light on the smoking substitute device, the representation of the light on the mobile device may show the same colour and/or with the same pattern as the light on the smoking substitute device to perform the second notification. For example, where a first notification comprises three vibrations, the second notification may also comprise three vibrations or three visual notifications indicative of vibration.

The front and/or rear surface of the device body may include visual user feedback means, for example one or more lights e.g. one or more LEDs. In some embodiments, the device body may include an illumination region configured to allow light provided by a light source (e.g. one or more LEDs) within the device body to shine through. The device may be configured to operate the light to display a variety of colours, flash, or illuminate different sections of the light in turn so as to cause a certain visual effect. This visual effect may form the first notification.

The device may comprise a movement detection unit (e.g. an accelerometer) for detecting a movement of the device, and a haptic feedback generation unit (e.g. an electric motor and a weight mounted eccentrically on a shaft of the electric motor). The haptic generation unit may be used to perform a haptic notification.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Summary of the Figures

Embodiments and experiments illustrating the principles of the invention will now be discussed with reference to the accompanying figures in which:
**Figure 1** shows an example system for managing a smoking substitute device.
**Figure 2(a)** shows an example smoking substitute device for use as the smoking substitute device in the system of Fig. 1.
**Figure 2(b)** shows the main body of the smoking substitute device of Fig. 2(a) without the consumable.
**Figure 2(c)** shows the consumable of the smoking substitute device of Fig. 2(a) without the main body.
**Figure 3(a)** is a schematic view of the main body of the smoking substitute device of Fig. 2(a).
**Figure 3(b)** is a schematic view of the consumable of the smoking substitute device of Fig. 2(a).
**Figure 4** shows a schematic view (not to scale) of the smoking substitute device of Figure 2 and the mobile device shown in Figure 1.
**Figure 5a** shows an example of a process for ensuring notifications from a mobile device and a smoking substitute device are simultaneous.
**Figure 5b** shows another example of a process for ensuring notifications from a mobile device and a smoking substitute device are simultaneous.
**Figure 5c** shows another example of a process for ensuring notifications from a mobile device and a smoking substitute device are simultaneous.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

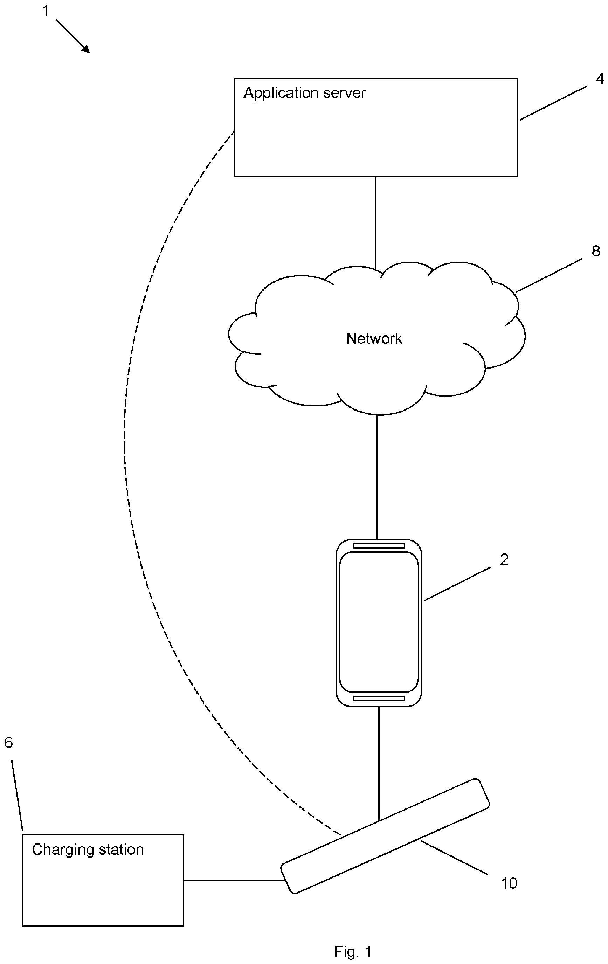

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth™, with an application (or "app") installed on the mobile device 2, e.g. via a suitable wireless interface (not shown) on the mobile device 2. The mobile device 2 may be a mobile phone, for example. The application on the mobile phone is configured to communicate with the application server 4, via a network 8. The application server 4 may utilise cloud storage, for example.

The network 8 may include a cellular network and/or the internet.

In other examples, the smoking substitute device 10 may be configured to communicate with the application server 4 via a connection that does not involve the mobile device 2, e.g. via a narrowband internet of things ("NB-IoT") connection. In some examples, the mobile device 2 may be omitted from the system.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network.

The app installed on the mobile device and the application server 4 may be configured to assist a user with their smoking substitute device 10, based on information communicated between the smoking substitute device 10 and the app and/or information communicated between the app and the application server 4.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

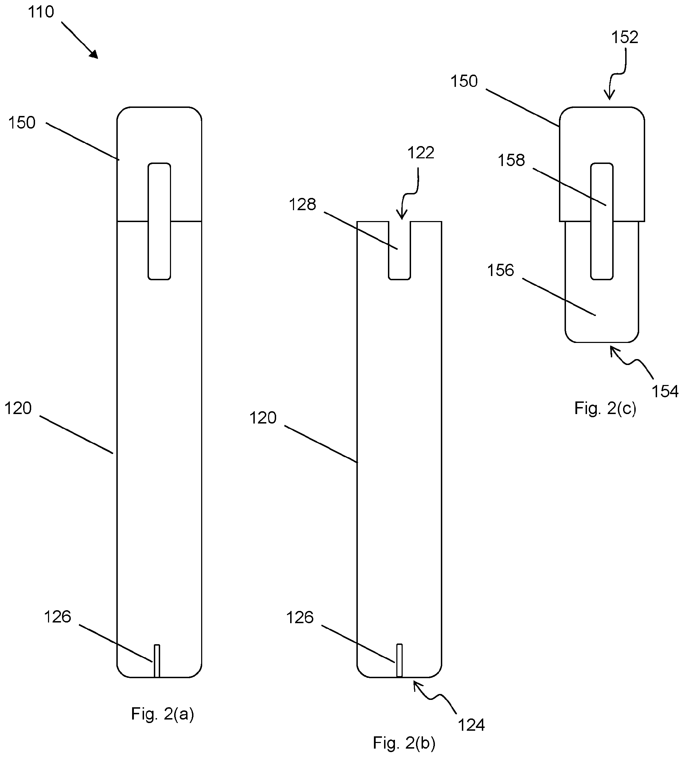

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120, e.g. with the consumable 150 being retained in the aperture via an interference fit. In other examples, the main body 120 and the consumable could be physically coupled together by screwing one onto the other, through a bayonet fitting, or through a snap engagement mechanism, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

In this present embodiment, the consumable 302 is a "single-use" consumable. That is, upon exhausting the e-liquid in the tank 156, the intention is that the user disposes of the whole consumable 150. In other embodiments, the e-liquid (i.e. aerosol former) may be the only part of the system that is truly "single-use". In such embodiments, the tank 156 may be refillable with e-liquid or the e-liquid may be stored in a non-consumable component of the system. For example, the e-liquid may be stored in a tank located in the device or stored in another component that is itself not single-use (e.g. a refillable tank).

The tank 156 may be referred to as a "clearomizer" if it includes a window 158, or a "cartomizer" if it does not.

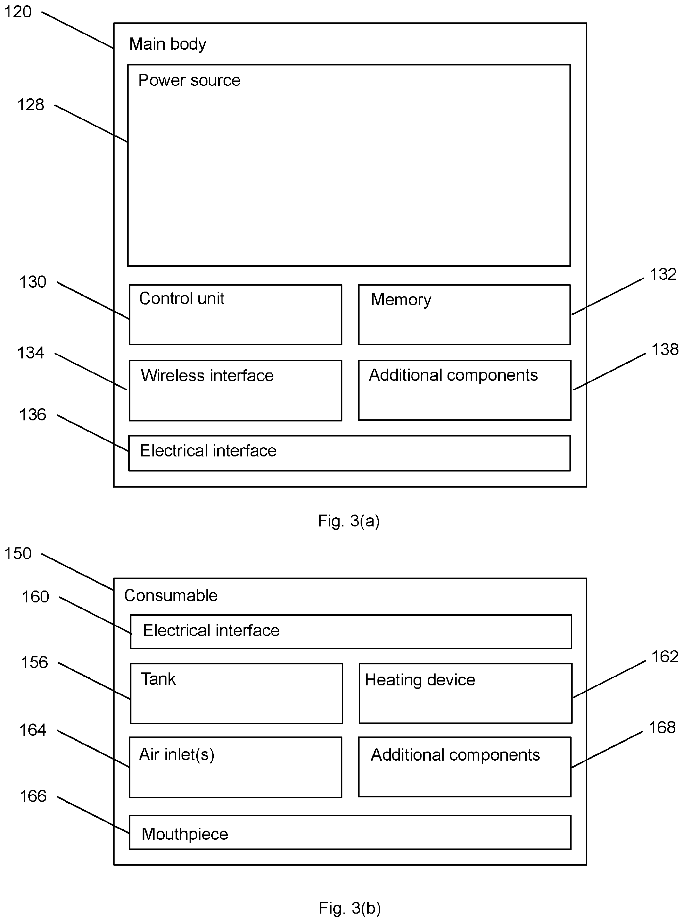

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, a wireless interface 134, an electrical interface 136, and, optionally, one or more additional components 138.

The power source 128 is preferably a battery, more preferably a rechargeable battery.

The control unit 130 may include a microprocessor, for example.

The memory 132 is preferably includes non-volatile memory.

The wireless interface 134 is preferably configured to communicate wirelessly with the mobile device 2, e.g. via Bluetooth. To this end, the wireless interface 134 could include a Bluetooth™ antenna. Other wireless communication interfaces, e.g. WiFi, are also possible.

The electrical interface 136 of the main body 120 may include one or more electrical supply contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above. The light 126 may be an LED located behind a small translucent cover located a bottom end 124 of the main body 120 as shown in the Figures, or the light may take another form. For example, the light may be located beneath a translucent portion of the housing of the main body, so that no separate translucent cover is required. The light may be configured so that different visual effects may be presented. For example, different colours may be presented, the light may flash, and/or the light may have several sections that can be activated separately (e.g. sequentially) to cause a visual effect.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

The additional components 138 of the main body 120 may include a reading device configured to read information associated with the consumable from a machine readable data source included in (e.g. contained in the body of, or attached to) the consumable 150.

In some examples, the reading device (if present) may be configured to read information from the machine readable data source non-wirelessly, e.g. using an electrical connection between the main body 120 and consumable 150.

For example, the reading device (if present) may include a set of one or more electrical communication contacts configured to read information from the machine readable data source via an electrical connection established between the set of one or more electrical communication contacts and the machine readable data source. Conveniently, the set of one or more electrical communication contacts of the reading device may be configured to provide the electrical connection by engaging with a set of one or more electrical communication contacts of the consumable 150, when the main body 120 and the consumable 150 are physically coupled together.

In some examples, the reading device (if present) may be configured to read information from the machine readable data source wirelessly, e.g. via electromagnetic waves or optically. Thus, for example, the machine readable data source included in the consumable 150 could be an RFID tag (in which case the reading device included in the main body 120 may be an RFID reader) or a visual data source such as a barcode (in which case the reading device included in the main body may be an optical reader, e.g. a barcode scanner). Various wireless technologies and protocols may be employed to allow the reading device to wirelessly read information from a machine readable data source included in or attached to the consumable 150, e.g. NFC, Bluetooth, Wi-Fi, as would be appreciated by a skilled person.

The reading device (if present) may be configured to write information associated with the consumable to the machine readable data source (e.g. wirelessly or non-wirelessly, via one of the mechanisms discussed above) in addition to being configured to read information associated with the consumable from the machine readable data source. In this case, the reading device may be referred to as a reading/writing device.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical supply contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

The additional components 168 of the consumable 150 may include a machine readable data source, which may e.g. be contained in the body of, or attached to the consumable 150. The machine readable data source may store information associated with the consumable. The information associated with the consumable may include information concerning the content of the consumable (e.g. e-liquid type, batch number) and/or a unique identifier, for example.

The machine readable data source may be rewritable, e.g. a rewritable RFID chip, or read only, e.g. a visual data source such as a barcode. As indicated above, the additional components 138 of the main body 120 may include a reading device configured to read information associated with the consumable from the machine readable data source.

For example, the electrical interface 160 of the consumable 150 may include a set of one or more electrical communication contacts, which may allow a reading device of the main body to read information from a machine readable data source of the consumable, e.g. as discussed previously.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS™ smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO™ e-cigarette discussed above.

As another example, an entirely disposable (one use) smoking substitute device could be used as the smoking substitute device 10 of Fig. 1, instead of the smoking substitute device 110.

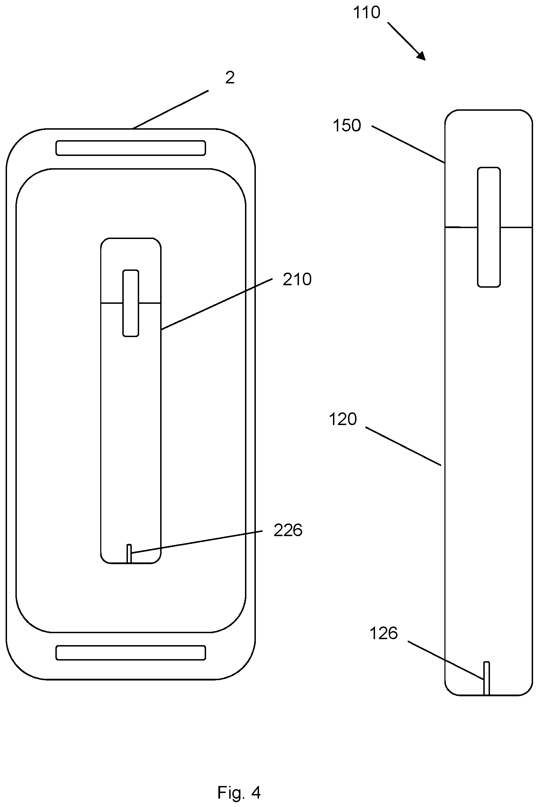

Figure 4 shows a schematic view of smoking substitute device 110 and mobile device 2. Mobile device 2 may have an app installed to assist in communicating with the smoking substitute device 110 and/or displaying information relating to the smoking substitute device 110 to the user. In one example, the app may display an image 210 representing the smoking substitute device 110 on the screen of the mobile device 2 as shown in Figure 4.

The smoking substitute device 110 may provide a notification to the user of a property or status of the smoking substitute device 110. For example, a notification may be provided when the battery is running low or when the smoking substitute device 110 is connected with the mobile device 2.

The notification may be haptic (for example, the device may vibrate) or visual (for example, the light 126 may be activated).

When the smoking substitute device 110 is connected with the mobile device, and the image 210 representing the smoking substitute device 110 is displayed on the mobile device, the image may display a second notification corresponding to the first notification on the smoking substitute device simultaneously.

For example, when the first notification is provided by light 126 on the smoking substitute device 110, the image 210 representing the smoking substitute device 110 may change to mirror the first notification by showing the virtual light 226 as activated in the same manner as the light 126 on the smoking substitute device 110, thereby providing the second notification.

When the first notification on the smoking substitute device 110 is a haptic notification, the image 210 may simultaneously indicate that the device is vibrating, for example by showing an icon or by moving the image 210 in a manner similar to a vibrating device, thereby providing the second notification. Additionally or alternatively, the mobile device may provide a corresponding haptic notification simultaneously to the first notification on the smoking substitute device. For example, when the first notification is a vibration having a certain pattern, the second notification may be a vibration of the mobile device having the same pattern.

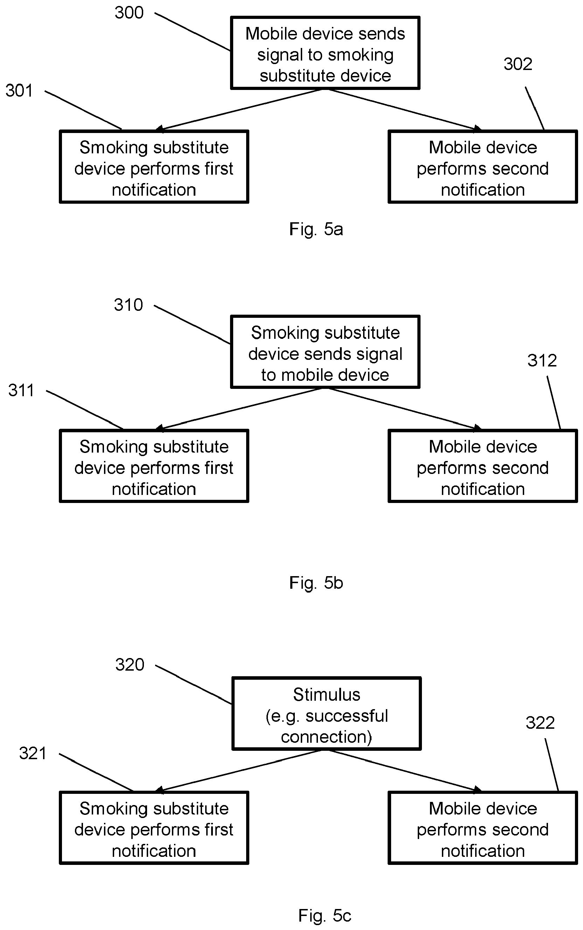

Fig. 5a, 5b and 5c show three examples of processes that may be used in order that the notifications are simultaneous. The skilled person will be aware that there may be other ways in which the first and second notifications may be provided simultaneously.

In Fig. 5a, at step 300, the mobile device sends a signal to the smoking substitute device and then performs the second notification at step 302. When the smoking substitute device 110 receives the signal, the smoking substitute device performs the first notification at step 301. Thus the notifications are performed simultaneously at steps 301 and 302.

In Fig. 5b, at step 301, the smoking substitute device sends a signal to the mobile device and then performs the first notification at step 311. When the mobile device receives the signal, the mobile device performs the second notification at step 312. Thus the notifications are performed simultaneously at steps 311 and 312.

The signals may also have other purposes. For example, a signal from the smoking substitute device to the mobile device which indicates a connection has been achieved may also be a signal indicative of the smoking substitute device performing a first notification and may cause the mobile device to perform a corresponding second notification. The same is true of a signal from the mobile device to the smoking substitute device indicating a connection has been achieved.

In Fig. 5c, a stimulus (step 320), such as a connection being formed causes both the smoking substitute device to perform the first notification (step 321) and the mobile device to perform the second notification (step 322). Thus no signal from one device to the other is needed and the notifications are performed simultaneously at steps 321 and 322.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A system comprising a smoking substitute device and a mobile device, the smoking substitute device being connected to a mobile device, and the system being configured to perform a first notification on the smoking substitute device and simultaneously perform a second notification on the mobile device, wherein the second notification corresponds the first notification.

2. A system according to claim 1 wherein the system is configure to perform the first and second notifications when a connecting process between the smoking substitute device and the mobile device has completed successfully.

3. A system according to any preceding claim, wherein the first notification comprises a visual notification.

4. A system according to claim 3, wherein the first notification comprises activation of a light on the smoking substitute device.

5. A system according to claim 4, wherein activation of the light comprises flashing the light in a pattern.

6. A system according to any preceding claim wherein the second notification is a visual notification.

7. A system according to claim 6, wherein the mobile device is configured to display an image representing the smoking substitute device and the second notification comprises a representation of the first notification on the image.

8. A system according to claim 7 and any of claims 4 or 5, wherein a representation of the light on the image shows the same colour and/or the same pattern as the light on the smoking substitute device to perform the second notification.

9. A system according to any preceding claim wherein the first notification comprises a haptic notification.

10. A system according to claim 9 wherein the second notification comprises a visual notification indicative of vibration, and/or the second notification comprises a haptic notification on the mobile device.

11. A method of managing a smoking substitute device, the smoking substitute device being connected to a mobile device, the method comprising: providing a first notification on the smoking substitute device and simultaneously providing a second notification corresponding to the first notification on the mobile device.

12. A method according to claim 11, wherein the first and second notifications are performed when a connecting process between the smoking substitute device and the mobile device has completed successfully.

13. A method according to any of claims 11 or 12, wherein the first notification comprises a visual notification.

14. A method according to claim 13, wherein the mobile device is configured to display an image representing the smoking substitute device and the second notification comprises a representation of the first notification on the image.

15. A smoking substitute device
the smoking substitute device being configured to, when connected with a mobile device, either:
(i) perform a first notification and send a signal to the mobile device configured to cause a corresponding second notification to occur on the mobile device simultaneously to the first notification, or
(ii) receive a signal from the mobile device indicative of the mobile device performing the second notification and perform the corresponding first notification simultaneously to the second notification.
